# EUROPÄISCHE PATENTANMELDUNG

(11) **EP 0 767 567 A2**
(43) Veröffentlichungstag der Anmeldung: **09.04.1997**
(21) Anmeldenummer: 96104196.9
(22) Anmeldetag: 16.03.1996
(51) Int. Cl.: H04M 3/00

(54) **Verfahren zur Rufnummernauswertung bei ankommenden Verbindungen**

(30) Priorität: 06.10.1995 DE 19537232
(71) Anmelder: Deutsche Telekom AG, 53113 Bonn (DE)
(72) Erfinder: Baumkötter, Manfred, 48346 Ostbevern (DE)

(57) **Zusammenfassung**

2.1. Die Erfindung bezieht sich auf die Verwendung von gespeicherten Informationen/Rufnummern für weitere automatische bzw. halbautomatische Aktionen.
2.2. Erfindungsgemäß werden die Rufnummern von anrufenden Teilnehmern, welche im Display angezeigt werden, während der bestehenden Verbindung mit dem jeweils anrufenden Teilnehmer wahlweise automatisch bzw. manuell vom Displayspeicher in einen für eine Wahlwiederholung geeigneten Speicher umgespeichert bzw. abgelegt.
2.3. Die erfindungsgemäße Lösung ist insbesondere für Fernsprechteilnehmer, wie beispielsweise Manager, Verkäufer und Vertreter interessant, welche ständig erreichbar sein müssen, bzw. für welche es darauf ankommt, möglichst schnell auf Anrufe zu reagieren.

## Beschreibung

Nach dem Stand der Technik werden die, durch Telekommunikationsvermittlungssysteme bei ankommenden Verbindungen übermittelten Informationen/Rufnummern, bei Telefonen in Displayspeichern gespeichert. Sie dienen ausschließlich der Information des Benutzers. Eine automatische bzw. halbautomatische Weiterverwendung der Informationen ist nicht möglich.

Die Erfindung macht es sich zur Aufgabe, die gespeicherten Informationen/Rufnummern für weitere automatische bzw. halbautomatische Aktionen zu verwenden.

Bei einer ankommenden Verbindung aus dem ISDN wird die Rufnummer des Anrufers zum angerufenen Teilnehmer übertragen. Sie wird hier in einem Display angezeigt. Bei höherwertigen Telefonen werden die Rufnummern der Anrufer auch bei Nichtabfrage abgespeichert, damit der Benutzer nachvollziehen kann, wer versucht hat, ihn beispielsweise bei Abwesenheit zu erreichen.

Erfindungsgemäß werden Bedienelemente angeordnet, die es ermöglichen, diese Rufnummern so zu speichern, daß sie für eine abgehende Wahl verwendet werden können. Dabei kann die Rufnummer im Displayspeicher fixiert oder in einen weiteren geeigneteren Speicher umgespeichert werden.

Die Fixierung/Umspeicherung soll zu jeder Zeit möglich sein, sowohl während einer Verbindung, als auch danach aus einer protokollierten Liste der Anrufer. Bei einer gespeicherten Liste von Anrufern können beispielsweise per Cursor bestimmte Rufnummern ausgewählt werden, um sie in geeignete Speicher umzuspeichern. Aus diesen Speichern ist dann eine automatische Wahl ggf. nach Auswahl einer Rufnummer per Cursor möglich.

Eine Variante der Erfindung besteht darin, gleich alle übermittelten Rufnummern in zur abgehenden Wahl geeigneten Speichern abzulegen. Diese Speicher sind dann beispielsweise so auszulegen, daß jeweils bei Vollbelegung die älteste gespeicherte Rufnummer gelöscht wird. Für einen Rückruf bzw. für eine Anwahl kann dann per Cursor eine der Rufnummern ausgewählt werden. Es besteht auch die Möglichkeit, alle gespeicherten Rufnummern automatisch in Folge anzuwählen. Dazu müssen vorher die nicht benötigten Rufnummern aus dem Speicher gelöscht bzw. deaktiviert werden. Nach Start der Prozedur wählt das Telefon dann eine erste der gespeicherten Rufnummern an. Nach Beendigung des Gesprächs bzw. nach Ablauf einer definierten Zeit bei Nichtmeldung des Angerufenen wird dann die nächste Rufnummer angewählt. Eine erreichte Rufnummer wird anschließend gelöscht/unterdrückt.

Nach dem Stand der Technik sind Rufnummernfilter bekannt. Diese Rufnummernfilter machen es möglich, daß ein Telefon beispielsweise nur bei ganz bestimmten Anrufern klingelt. Die Erfindung nutzt diese Technik, um nur ganz bestimmte Rufnummern in die erfindungsgemäßen Wahlspeicher umzuspeichern. Der Benutzer erhält dann eine userdefinierte Rückrufliste, aus der beispielsweise per Cursor alle Anrufer automatisch angewählt werden können. Nicht bekannte Rufnummern können verworfen oder in einer separaten Liste gespeichert werden.

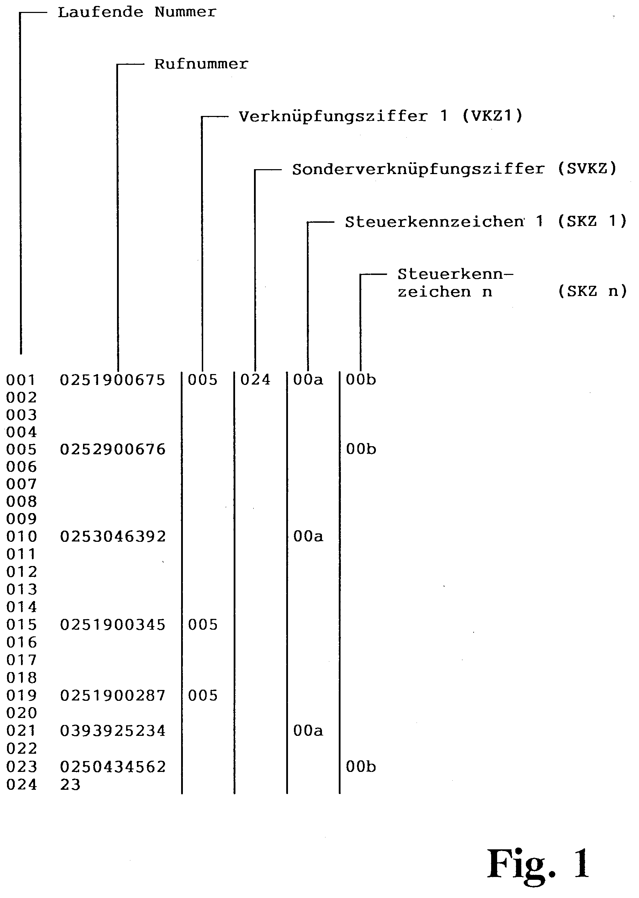

Eine weitere Möglichkeit, den Bedienungskomfort des Telefons zu verbessern, besteht in einer speziellen Speicherorganisation, wie sie beispielsweise Fig. 1 zeigt. Hier ist/sind jeder Rufnummer eine laufende Nummer, eine Verknüpfungsziffer VKZ, eine Sonderverknüpfungsziffer SKVZ und ein oder mehrere Steuerkennzeichen SKZ zugeordnet.

Wenn nun aus dem Netz eine Rufnummer empfangen wurde, wird diese mit den eingespeicherten Rufnummern verglichen. Bei Rückruf drückt der Benutzer eine Rückruftaste. Hierdurch wird veranlaßt, daß das System neben der direkten Rückrufnummer weitere im Speicher durch die VKZ gekennzeichnete Rufnummern anbietet (Privatnummern, Funktelefonrufnummern oder SCALL/Cityrufnummern). Der Benutzer kann nun eine dieser Rufnummern für seinen Rückruf/Anruf nutzen.

Sollte der Rufnummer zusätzlich oder ausschließlich eine Sonderverknüpfungsziffer SVKZ zugeordnet sein, bedeutet das, daß eine anlagenspezifische Kurzwahlnummer für die Anwahl zur Verfügung steht. Einige Anlagenbetreiber/Anlagen gestatten/ermöglichen direkte Anrufe nur per Kurzwahl. Bei einem Rückrufwunsch ersetzt das System nun automatisch oder halbautomatisch die empfangene Rufnummer durch eine Kurzwahlnummer. Weitere Möglichkeiten bestehen darin, Ortsnetzkennziffern bzw. Amtsrufnummern bei Anrufen aus der eigenen Anlage zu unterdrücken. Dazu müssen die eigene Ortsnetzkennziffer sowie ggf. die eigene Amtsrufnummer im Telefon eingespeichert sein.

Die Rufnummern von besonders wichtigen Anrufern können im Speicher durch Steuerkennzeichen SKZ ergänzt werden. Der Empfang einer Rufnummer, die im Speicher durch ein SKZ gekennzeichnet wurde, bewirkt dann beispielsweise eine Tonänderung, bzw. eine Erhöhung der Lautstärke der Signaleinrichtung des Telefons. Durch ein weiteres SKZ kann ein zusätzlicher Wecker zugeschaltet werden. Eine Makroprozedur könnte die Weiterschaltung auf eine andere Nebenstelle bewirken.
Da für die erfindungsgemäße Einrichtung des Telefons recht umfangreichen Eingaben und Konfigurationen notwendig werden, bietet sich die Anordnung einer Computerschnittstelle an (R 232). Dadurch ist es möglich, alle Eingaben, die zum Betrieb des Telefons erforderlich sind, mit Hilfe einer komfortablen Benutzeroberfläche am PC einzugeben. Die Informationen können danach per "download" vom PC über die Schnittstelle des Telefons in die entsprechenden Speicher geladen/umgespeichert werden. Desweiteren bietet sich die Möglichkeit, die Informationen im PC ( z. B. per Diskette) abzuspeichern, so daß beispielsweise beim Auswechseln des Telefons die betreffenden Eingaben erneut umgespeichert werden können.

Fig. 1 zeigt anhand eines Diagramms eine mögliche Speicherorganisation eines erfindungsgemäß ausgebildeten Telefons.

Fig. 2 zeigt anhand eines Blockschaltbildes ein Ausführungsbeispiel für ein erfindungsgemäß ausgebildetes Telefon.

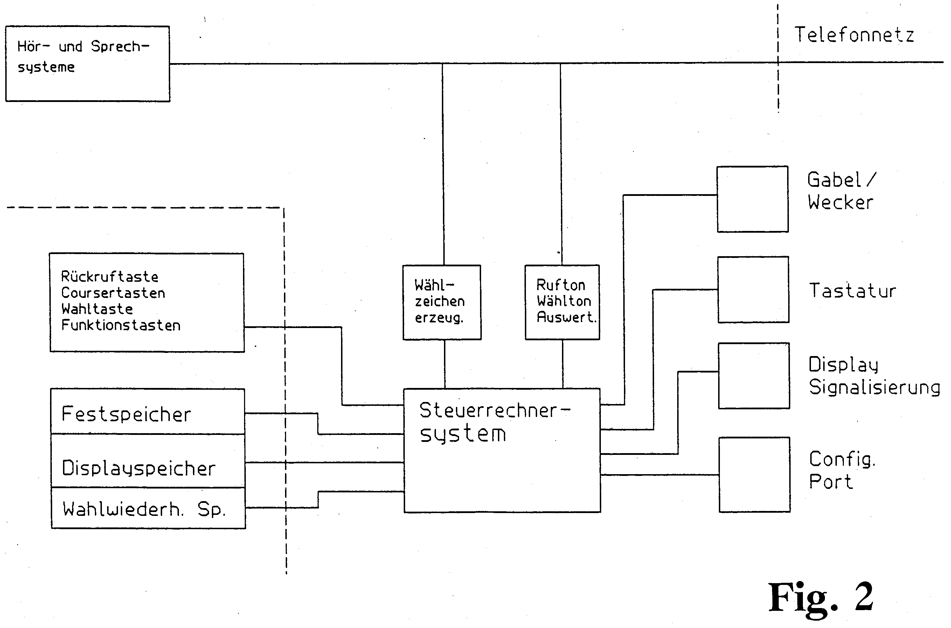

Die technische Lösung der Erfindung wird anhand eines Beispiels erläutert (Fig. 1).
1. Ein Telefon wird angewählt. Dabei wird die Rufnummer des Anrufers, wie im ISDN üblich, mit übermittelt (0251 9006 75).
2. Die Rufnummer wird im Displayspeicher (Fig. 2) gespeichert und angezeigt.
3. Der Steuerrechner vergleicht die empfangene Rufnummer mit den im Festspeicher gespeicherten Rufnummern.
4. Der Vergleich ergibt, daß die Rufnummer unter der laufenden Nummer 001 abgespeichert ist, und daß der Rufnummer eine VKZl, eine SVKZ, ein SKZ1 und ein SKZn zugeordnet ist (Fig. 1).
5. Das SKZl erhöht die Lautstärke der Signaleinrichtung.
6. Das SKZn bewirkt die Zuschaltung eines Außenweckers.
7. Der Ruf wird abgefragt, das Gespräch geführt und beendet.
8. Der Anrufer soll zurückgerufen werden.
9. Der Benutzer drückt die Rückruftaste (ggf. wird die Rufnummer vorher per Cursor ausgewählt).
10.Das System bietet im Display eine Rufnummernliste an. An erster Stelle der Liste steht, bewirkt durch die SVKZ, (laufende Nr. 24) die Kurzwahlnummer 23. Diese wird bereits per Cursor vorselektiert. An den weiteren Stellen folgen die Ziffern, die durch die VKZl (005) gekennzeichnet sind (laufende Nr. 001, 015, 019). Es handelt sich hierbei um Rufnummern, unter denen der Anrufer ebenfalls erreichbar ist.
11.Der Benutzer startet die Anwahl zum Beispiel durch das Drücken der Wahlwiederholungstaste. Die Anwahl erfolgt, aber der Angerufene meldet sich nicht. Die Verbindung wird ausgelöst.
12.Der Benutzer wählt nun per Cursor eine der im Display angebotenen Alternativrufnummern aus und startet einen weiteren Anwahlversuch.

Die erfindungsgemäße Lösung ist insbesondere für Fernsprechteilnehmer, wie beispielsweise Manager, Verkäufer und Vertreter interessant, da sie diesem Personenkreis ein komfortables Anruf- bzw. Rückrufsystem bietet.
Das ist insbesondere dann von Vorteil, wenn der betreffende Personenkreis über mehrere alternative Kommunikationsmöglichkeiten verfügt.
Ein besonderer Vorteil der erfindungsgemäßen Lösung wird bei der Anwendung in Telekommunikationsanlagen gesehen, die ausschließlich den Anruf per Kurzwahl erlauben.

## Patentansprüche

1. Verfahren zur Rufnummernauswertung bei ankommenden Verbindungen, wobei im Endgerät ankommende Rufnummern erfaßt werden, **dadurch gekennzeichnet,** daß die Rufnummer eines anrufenden Teilnehmers, welche im Display angezeigt wird, während der bestehenden Verbindung mit dem anrufenden Teilnehmer wahlweise automatisch bzw. manuell vom Displayspeicher in einen für eine Wahlwiederholung geeigneten Speicher umgespeichert bzw. abgelegt wird.

2. Verfahren nach Anspruch 1, dadurch gekennzeichnet, daß im Protokollspeicher protokollierte Rufnummern von nicht abgefragten Anrufen in einen Wahlwiederholungsspeicher übernommen bzw. eingespeichert werden.

3. Verfahren nach Anspruch 1, dadurch gekennzeichnet, daß in einen Rufnummernspeicher durch den Benutzer bestimmte Rufnummern eingespeichert werden, daß zwischen diesen Rufnummern/Teilnehmern logische Verknüpfungen/Verbindungen hergestellt werden und daß den Rufnummern Steuerkennzeichen zugeordnet werden.

4. Verfahren nach Anspruch 1, 2 und 3, dadurch gekennzeichnet, daß die empfangenen Rufnummern mit den eingespeicherten Rufnummern verglichen werden und daß die Rufnummern beim Umspeichern in den Wahlwiederholungsspeicher, entsprechend den für sie bestehenden logischen Verknüpfungen, durch geeignete andere Rufnummern ersetzt werden.

5. Verfahren nach Anspruch 1,2 und 3, dadurch gekennzeichnet, daß die empfangenen Rufnummern mit den eingespeicherten Rufnummern verglichen werden, daß unter der Voraussetzung, daß die empfangene Rufnummer bereits eingespeichert ist und daß zu der bereits eingespeicherten Rufnummer logische Verknüpfungen vorhanden sind, beim Betätigen einer Taste, in einem Display, entsprechend den logischen Verknüpfungen, alternative Rückrufnummern zur Umspeicherung in den Wahlwiederholungsspeicher angeboten werden, daß der Benutzer eine der angebotenen Rufnummern auswählt und daß diese Rufnummer in den Wahlwiederholungsspeicher umgespeichert wird.

6. Verfahren nach Anspruch 1, 2 und 3, dadurch gekennzeichnet, daß die empfangenen Rufnummern mit den eingespeicherten Rufnummern verglichen werden und daß bei entsprechend zugeordneten Steuerkennzeichen (SKZ) die Signaleinrichtungen des Telefons beeinflußt werden, wobei das nunmehr ausgegebene Anrufsignal vom allgemein üblichen Standard-Anrufsignal abweicht, so daß beispielsweise ein wichtiger Anruf bereits am Ton des Anrufsignals erkannt werden kann.

7. Verfahren nach Anspruch 1,2 und 3, dadurch gekennzeichnet, daß die empfangenen Rufnummern mit den eingespeicherten Rufnummern verglichen werden und daß im Ergebnis des Vergleichs eine Einstufung in bekannte und unbekannte Rufnummern vorgenommen wird.

8. Verfahren nach Anspruch 1,2,4 und 7, dadurch gekennzeichnet, daß die gespeicherten Rufnummern automatisch entsprechend ihrer Anordnung im Wahlwiederholungsspeicher nacheinander angewählt werden.
